# EUROPEAN PATENT SPECIFICATION

(11) **EP 4 092 190 B1**
(45) Date of publication and mention of the grant of the patent: **08.11.2023**
(21) Application number: 21174601.1
(22) Date of filing: 19.05.2021
(51) Int. Cl.: D21H 27/30, B32B 29/00, B32B 29/08, D21H 27/38, D21H 27/40, B65D 81/00

(54) **CORRUGATED BOARD FOR HUMID CONDITIONS**
WELLPAPPE FÜR FEUCHTE BEDINGUNGEN
CARTON ONDULÉ POUR CONDITIONS HUMIDES

(43) Date of publication of application: 23.11.2022
(73) Proprietor: Billerud Aktiebolag (publ), 169 27 Solna (SE)
(72) Inventor: BJÖRKLUND, Magnus, 663 41 Hammarö (SE)
(74) Representative: Kransell & Wennborg KB

(56) References cited:
- WO-A1-2015/044821
- US-A1- 2021 040 696
- US-B1- 6 190 744

## Description

### TECHNICAL FIELD

The present disclosure relates to the field of corrugated board, in particular boxes formed thereof that are intended for use in humid climates.

### BACKGROUND

A corrugated board typically comprises an outer linerboard (that faces the outside of a box formed from the corrugated board), an inner linerboard (that faces the inside of the box) and a fluting (also referred to as corrugated medium) arranged between the outer and the inner linerboard. The outer linerboard is often a so called white top liner that forms a surface suitable for printing.

The performance of a corrugated board is often measured using the box compression test (BCT), which is the capability of a box formed from the corrugated board to withstand a compressive force. Accordingly, "BCT strength" (sometimes referred to as stacking strength) is an often-discussed property of a box or package of corrugated board.

The BCT strength is typically negatively affected by a humid climate. This is because of the hygroscopicity of the paper material. When the paper material absorbs moisture, the number of fibre-fibre bonds is reduced and the load-bearing capacity is impaired. Hence, many different approaches to overcoming the hygroscopicity problem have been suggested in the prior art.

### SUMMARY

An object of the present disclosure is to improve the performance of corrugated board in a humid climate and/or reduce the amount of material in corrugated board without impairing performance in such climate.

As indicated above, the hygroscopicity of linerboard in a humid climate has been considered a problem and much effort has been devoted to reducing it.

The present inventor has however realized that hygroexpansivity can be a beneficial property in packaging if utilized correctly. The present invention is based on the insight that a bulging tendency of a container wall is beneficial if directed inwards. This is because the inward-bulging action creates a stabilized state by counteracting the outwards-directed force exerted on the container wall by the contents of the filled container. When the hygroexpansivity in the cross direction (CD) of the inner linerboard is higher than the hygroexpansivity in the CD of the outer linerboard, the container wall is predestined to bulge inwards in humid climates and thus designed to adopt the stabilized configuration under the conditions that are normally toughest on corrugated board containers. The present disclosure is focused on the CD of the linerboard since this is the direction that carries weight in most box and tray constructions. Further, the long side of the bottom of a typical fruit tray or removal box typically extends in the CD of the linerboard.

Accordingly, the present disclosure provides a container having at least one wall composed of a corrugated board comprising an inner linerboard, an outer linerboard and a fluting arranged between the inner linerboard and the outer linerboard, characterized in that the hygroexpansivity in the CD of the inner linerboard is higher than the hygroexpansivity in the CD of the outer linerboard.

In the present disclosure, hygroexpansivity is measured according to ISO 8226-2:1990. In this measurement, the length in the CD at 50% RH is compared to the length in the CD at 84% RH.

Further, there is provided a use of such a container for packaging in a relative humidity of at least 80%, such as at least 85%.

The present disclosure also provides a corrugated board material in which the linerboard intended to face the inside of the container has the higher hygroexpansivity in the CD. This is expressed as a corrugated board comprising a first linerboard, a second linerboard and a fluting arranged between the first and the second linerboard, wherein the first linerboard is unbleached and the second linerboard is a white top linerboard or a pigment-coated linerboard, characterized in that the hygroexpansivity in the CD of the first linerboard is higher than the hygroexpansivity in the CD of the second linerboard. As understood by the skilled person, the white top linerboard or the pigment-coated linerboard will face the outside of the container according to the intended use.

### DETAILED DESCRIPTION

As a first aspect of the present disclosure, there is provided a container having at least one wall composed of a corrugated board comprising an inner linerboard, an outer linerboard and a fluting arranged between the inner linerboard and the outer linerboard, characterized in that the hygroexpansivity in the CD of the inner linerboard is higher than the hygroexpansivity in the CD of the outer linerboard.

Preferably, the hygroexpansivity in the CD of the inner linerboard is at least 20% higher than the hygroexpansivity in the CD of the outer linerboard.

For the avoidance of doubt, the inner linerboard faces the inside of the container and the outer linerboard faces the outside of the container.

The wall may be a bottom wall or a side wall. Preferably, the container comprises at least two side walls, such as four side walls, composed of said corrugated board. In one embodiment, the container comprises four side walls and a bottom wall composed of said corrugated board.

A suitable example of an inner linerboard that provides the higher hygroexpansivity is a containerboard formed from a furnish comprising at least 60% by dry weight of a semi-chemical pulp, such as a furnish comprising at least 70% by dry weight of a semi-chemical pulp, such as a furnish comprising at least 70% by dry weight of a semi-chemical pulp. The semi-chemical pulp is preferably NSSC pulp. The wood used for producing the semi-chemical pulp is typically at least 90% by dry weight hardwood, such as birch. Hence, the inner linerboard may be a non-corrugated semi chemical fluting. A "semi chemical fluting" is defined in the 5^{th} edition of Cepi ContainerBoard's European list of corrugated base papers (updated October 2017). Cepi ContainerBoard (CCB) is a European industry association of producers of corrugated case materials, also called containerboard.

The proportion of recycled fibres in the inner linerboard of the present disclosure is preferably below 15%, such as below 10%, such as below 5%. In one embodiment, the inner linerboard contains substantially no recycled fibres.

Further, the fluting of the corrugated board is preferably a corrugated semi chemical fluting. Hence both the fluting and the inner linerboard may be formed from the same type of material.

In one embodiment, the outer linerboard is a kraftliner, such as a brown kraftliner, a brown kraft top liner, a white top kraftliner or a white coated kraftliner. These four types of kraftliner are also defined in CCB's list discussed above.

For many applications, the corrugated board concept of the present disclosure allows for a reduction of the grammage of the inner linerboard. Hence the grammage (g/m²) of the inner linerboard may be lower than the grammage of the outer linerboard. In one embodiment, it is at least 15% lower, such as at least 20% lower, such as at least 25% lower.

The container of the first aspect is typically a box or a tray. Examples of boxes are removal boxes and heavy-duty boxes. An example of a tray is a produce tray, also referred to a fruit- and vegetable (F&V) tray.

The corrugated board of the F&V tray may for example be single wall, such as C flute, or double wall, such as BC flute. The corrugated board of the removal box may for example be double wall, such as BC flute. The corrugated board of the heavy-duty box may for example be double wall, such as AA flute.

The grammage of the outer linerboard is typically 150-320 g/m². The grammage of the inner linerboard is typically 130-220 g/m², such as 140-200 g/m².

In case of a C flute corrugated board for a F&V tray, the grammage of the outer linerboard is typically 250-320 g/m² and/or the grammage of the of the inner linerboard is typically 160-220 g/m², such as 180-220 g/m².

In case of a BC flute corrugated board for a F&V tray, the grammage of the outer linerboard is typically 170-230 g/m² and/or the grammage of the of the inner linerboard is typically 110-170 g/m², such as 120-160 g/m².

In case of a BC flute corrugated board for a removal box, the grammage of the outer linerboard is typically 150-200 g/m² and/or the grammage of the of the inner linerboard is typically 110-170 g/m², such as 120-160 g/m².

In case of an AA flute corrugated board for a heavy-duty box, the grammage of the outer linerboard is typically 240-320 g/m² and/or the grammage of the of the inner linerboard is typically 180-220 g/m².

As understood from the above, the corrugated board may comprise a middle linerboard and a second fluting. In one embodiment, it comprises two middle linerboards and a second and a third fluting (triple wall).

As a second aspect of the present disclosure, there is provided a use of the container of the first aspect for packaging in a relative humidity of at least 80%, such as at least 85%. An example of such packaging is that of fruit or vegetables transported or stored in an atmosphere of 80%-98% RH. The temperature of such an atmosphere is typically below 20 °C and often 0-10 °C.

As a third aspect, there is provided a corrugated board comprising a first linerboard, a second linerboard and a fluting arranged between the first and the second linerboard, wherein the first linerboard is unbleached and the second linerboard is a white top linerboard or a pigment-coated linerboard, characterized in that the hygroexpansivity in the CD of the first linerboard is higher than the hygroexpansivity in the CD of the second linerboard.

The fact that the second linerboard is a white top linerboard or a pigment-coated linerboard reflects shows that it will be the outer linerboard when the corrugated board of the third aspect is used in a container. Hence what is stated above regarding the outer linerboard applies to the second linerboard of the third aspect *mutatis mutandis.* Correspondingly, what is stated above regarding the inner linerboard applies to the first linerboard of the third aspect *mutatis mutandis.* Other embodiments of the first aspect also apply to the third aspect *mutatis mutandis.*

As a fourth, non-claimed, aspect, there is provided a corrugated board comprising a first linerboard, a second linerboard and a fluting arranged between the first and the second linerboard, characterized in that the grammage of the first linerboard is lower than the grammage of the second linerboard and in that the hygroexpansivity in the CD of the first linerboard is higher than the hygroexpansivity in the CD of the second linerboard. Again, the second linerboard is intended to be the outer linerboard when the corrugated board of the fourth, non-claimed, aspect is used in a container. Hence what is stated above regarding the outer linerboard applies to the second linerboard of the fourth, non-claimed, aspect *mutatis mutandis.* Correspondingly, what is stated above regarding the inner linerboard applies to the first linerboard of the fourth, non-claimed, aspect *mutatis mutandis.* Other embodiments of the first aspect also apply to the fourth, non-claimed, aspect *mutatis mutandis.* Hence, the grammage of the first linerboard maybe at least 15% lower, such as at least 20% lower, such as at least 25% lower, than the grammage of the second linerboard.

### EXAMPLES

### Example 1

A brown Fruit & Vegetable (F&V) single wall tray in the prior art is typically formed from a C flute corrugated board of:
- an outer 300 g/m² brown kraftliner;
- a 160 g/m² fluting of semichemical containerboard; and
- an inner 300 g/m² brown kraftliner.

To replace this prior art corrugated board, the present disclosure provides a C flute corrugated board of:
- an outer 300 g/m² brown kraftliner;
- a fluting of a 160 g/m² semichemical containerboard; and
- an inner liner of a 210 g/m² semichemical containerboard (a non-corrugated semi chemical fluting).

This new C flute corrugated board means a reduction of the paper consumption by 12%, without impaired performance in humid climates.

In F&V trays, downward bottom deflection may be particularly undesirable since the contents of the underlying tray is often pressure sensitive. Hence, the board construction of the present disclosure may be particularly beneficial in F&V trays.

### Example 2

A brown Fruit & Vegetable (F&V) double wall tray in the prior art is typically formed from BC flute corrugated board of:
- an outer 200 g/m² brown kraftliner;
- a 140 g/m² fluting of semichemical containerboard;
- a middle 200 g/m² brown kraftliner;
- a 140 g/m² fluting of semichemical containerboard;
- an inner 200 g/m² brown kraftliner.

To replace this prior art corrugated board, the present disclosure provides a corrugated board of:
- an outer 200 g/m² brown kraftliner;
- a 140 g/m² fluting of semichemical containerboard;
- a middle 200 g/m² brown kraftliner;
- a 140 g/m² fluting of semichemical containerboard; and
- an inner liner of a 140 g/m² semichemical containerboard.

This new BC flute corrugated board means a reduction of the paper consumption by 7%, without impaired performance in humid climates.

### Example 3

A "white" Fruit & Vegetable (F&V) single wall tray in the prior art is typically formed from a C flute corrugated board of:
- an outer 300 g/m² white top kraftliner;
- a 160 g/m² fluting of semichemical containerboard; and
- an inner 300 g/m² brown kraftliner.

To replace this prior art corrugated board, the present disclosure provides a C flute corrugated board of:
- an outer 300 g/m² white top kraftliner;
- a fluting of a 160 g/m² semichemical containerboard; and
- an inner liner of a 210 g/m² semichemical containerboard.

This new C flute corrugated board means a reduction of the paper consumption by 12%, without impaired performance in humid climates.

### Example 4

A brown Fruit & Vegetable (F&V) double wall tray in the prior art is typically formed from BC flute corrugated board of:
- an outer 200 g/m² white top kraftliner;
- a 140 g/m² fluting of semichemical containerboard;
- a middle 200 g/m² brown kraftliner;
- a 140 g/m² fluting of semichemical containerboard;
- an inner 200 g/m² brown kraftliner.

To replace this prior art corrugated board, the present disclosure provides a corrugated board of:
- an outer 200 g/m² white top kraftliner;
- a 140 g/m² fluting of semichemical containerboard;
- a middle 200 g/m² brown kraftliner;
- a 140 g/m² fluting of semichemical containerboard; and
- an inner liner of a 140 g/m² semichemical containerboard.

This new BC flute corrugated board means a reduction of the paper consumption by 7%, without impaired performance in humid climates.

### Example 5

A double wall removal box in the prior art is typically formed from BC flute corrugated board of:
- an outer 175 g/m² brown kraftliner;
- a 120 g/m² fluting of semichemical containerboard;
- a middle 150 g/m² brown kraftliner;
- a 120 g/m² fluting of semichemical containerboard;
- an inner 200 g/m² brown kraftliner.

To replace this prior art corrugated board, the present disclosure provides a corrugated board of:
- an outer 175 g/m² brown kraftliner;
- a 120 g/m² fluting of semichemical containerboard;
- a middle 150 g/m² brown kraftliner;
- a 120 g/m² fluting of semichemical containerboard; and
- an inner liner of a 140 g/m² semichemical containerboard.

This new BC flute corrugated board means a reduction of the paper consumption by 8%, without impaired performance in humid climates.

### Example 6

A heavy-duty double wall box in the prior art is typically formed from AA flute corrugated board of:
- an outer 280 g/m² brown kraftliner;
- a 175 g/m² fluting of semichemical containerboard;
- a middle 186 g/m² brown kraftliner;
- a 175 g/m² fluting of semichemical containerboard;
- an inner 280 g/m² brown kraftliner.

To replace this prior art corrugated board, the present disclosure provides a corrugated board of:
- an outer 280 g/m² brown kraftliner;
- a 175 g/m² fluting of semichemical containerboard;
- a middle 186 g/m² brown kraftliner;
- a 175 g/m² fluting of semichemical containerboard; and
- an inner liner of a 200 g/m² semichemical containerboard.

This new AA flute corrugated board means a reduction of the paper consumption by 7%, without impaired performance in humid climates.

### Example 6

A filled Bag-In-Box (BIB) package has a great bulging tendency. Hence, tests on BIB packages were carried out to show the effect of the invention.

As a reference, a BIB package was formed from a containerboard that is typical in the prior art. This containerboard was composed of:
- an outer 200 g/m² white top kraftliner;
- a 127 g/m² fluting of semichemical (NSSC) containerboard; and
- an inner 200 g/m² brown kraftliner.

An inventive BIB package was formed from a containerboard composed of:
- an outer 200 g/m² white top kraftliner;
- a 127 g/m² fluting of semichemical (NSSC) containerboard; and
- an inner liner of a 165 g/m² semichemical (NSSC) containerboard (a non-corrugated semi chemical fluting).

The BCT of the reference BIB and the inventive BIB, each filled with three litres of liquid, was tested under two different conditions, 50% relative humidity (RH) and 90% RH. Further, the extent panel bulging after 24h in 90% RH was tested. The results are presented in table 1 below.

**Table 1.**

| | Total grammage of corrugated board | BCT 50% RH | BCT 90% RH | Panel bulging 90% RH |
|---|---|---|---|---|
| Reference BIB | 564 g/m² | 119 kg | 58.7 kg | 8.00 mm |
| Inventive BIB | 529 g/m² | 121 kg | 65.5 kg | 5.99 mm |
| Difference | -6.2% | +1.6% | +11.6% | -25% |

### Example 6

The hygroexpansivity in the CD of a 175 g/m² white top kraftliner (WTKL) was compared to that of a 175 g/m² non-corrugated semi chemical fluting produced from a furnish of about 90% NSSC pulp and 10% kraft pulp in accordance with ISO 8226-2:1990. At 84% RH, the non-corrugated semi chemical fluting was 1.31% longer than at 50% RH. In contrast, the WTKL was 1.01% longer at 84% RH than at 50% RH. The hygroexpansivity in the CD was thus 29.7% ((1.31-1.01)/1.01) higher for the non-corrugated semi chemical fluting, which is suitable for use as the inner linerboard according to the present disclosure.

## Claims

1. A container having at least one wall composed of a corrugated board comprising an inner linerboard, an outer linerboard and a fluting arranged between the inner linerboard and the outer linerboard, **characterized in that** the hygroexpansivity in the CD of the inner linerboard is higher than the hygroexpansivity in the CD of the outer linerboard, wherein hygroexpansivity is measured according to ISO 8226-2:1990.

2. The container of claim 1, wherein the inner linerboard is a containerboard formed from a furnish comprising at least 80% by dry weight of a semi-chemical pulp, such as a NSSC pulp.

3. The container of claim 2, wherein the semichemical pulp is formed from at least 90% by dry weight of hardwood.

4. The container of any one of the preceding claims, wherein the outer linerboard is a kraftliner, such as a brown kraftliner, a white top kraftliner or a white coated kraftliner.

5. The container of any one of the preceding claims, wherein the grammage of the inner linerboard is lower than the grammage of the outer linerboard.

6. The container of any one of the preceding claims, which is a box or a tray.

7. The container of claim 6, which is a produce tray.

8. The container of any one of the preceding claims, wherein the corrugated board further comprises a middle linerboard and a second fluting.

9. Use of the container according to any one of the preceding claims for packaging in a relative humidity of at least 80%, such as at least 85%.

10. A corrugated board comprising a first linerboard, a second linerboard and a fluting arranged between the first and the second linerboard, wherein the first linerboard is unbleached and the second linerboard is a white top linerboard or a pigment-coated linerboard, **characterized in that** the hygroexpansivity in the CD of the first linerboard is higher than the hygroexpansivity in the CD of the second linerboard, wherein hygroexpansivity is measured according to ISO 8226-2:1990.

11. The corrugated board of claim 10, wherein the white top linerboard is a white top kraftliner or a white coated kraftliner.

12. The corrugated board of claim 10 or 11, wherein the grammage of the first linerboard is lower than the grammage of the second linerboard.

13. The corrugated board of any one of claims 10-12, wherein the first linerboard is a containerboard formed from a furnish comprising at least 80% by dry weight of a semi-chemical pulp, such as a NSSC pulp.

## Patentansprüche

1. Behälter mit mindestens einer Wand aus Wellpappe mit einem inneren Deckenpapier, einem äußeren Deckenpapier und einem zwischen dem inneren Deckenpapier und dem äußeren Deckenpapier angeordneten Wellenstoff, **dadurch gekennzeichnet, dass** die Feuchtdehnung in der CD des inneren Deckenpapiers höher ist als die Feuchtdehnung in der CD des äußeren Deckenpapiers, wobei die Feuchtdehnung gemäß ISO 8226-2:1990 gemessen wird.

2. Behälter nach Anspruch 1, wobei das innere Deckenpapier eine Behälterpappe ist, die aus einem Rohstoff gebildet ist, der mindestens 80 % des Trockengewichts eines halbchemischen Zellstoffs, beispielsweise eines NSSC-Zellstoffs, aufweist.

3. Behälter nach Anspruch 2, wobei der halbchemische Zellstoff zu mindestens 90 % des Trockengewichts aus Hartholz besteht.

4. Behälter nach einem der vorhergehenden Ansprüche, wobei das äußere Deckenpapier ein Kraftliner ist, beispielsweise ein brauner Kraftliner, ein Kraftliner mit weißer Oberseite oder ein weiß beschichteter Kraftliner.

5. Behälter nach einem der vorhergehenden Ansprüche, wobei das Flächengewicht der inneren Deckenpapiers geringer ist als das Flächengewicht des äußeren Deckenpapiers.

6. Behälter nach einem der vorhergehenden Ansprüche, bei dem es sich um eine Schachtel oder ein Tablett handelt.

7. Behälter nach Anspruch 6, bei dem es sich um ein Produkttablett handelt.

8. Behälter nach einem der vorhergehenden Ansprüche, wobei die Wellpappe außerdem ein mittleres Deckenpapier und einen zweiten Wellenstoff aufweist.

9. Verwendung des Behälters nach einem der vorhergehenden Ansprüche als Verpackung bei einer relativen Luftfeuchtigkeit von mindestens 80 %, beispielsweise mindestens 85 %.

10. Wellpappe, aufweisend ein erstes Deckenpapier, ein zweites Deckenpapier und einen zwischen dem ersten und dem zweiten Deckenpapier angeordneten Wellenstoff, wobei das erste Deckenpapier ungebleicht ist und das zweite Deckenpapier ein Deckenpapier mit weißer Oberseite oder ein pigmentbeschichtetes Deckenpapier ist, **dadurch gekennzeichnet, dass** die Feuchtdehnung in der CD des ersten Deckenpapiers höher ist als die Feuchtdehnung in der CD des zweiten Deckenpapiers, wobei die Feuchtdehnung gemäß ISO 8226-2:1990 gemessen wird.

11. Wellpappe nach Anspruch 10, wobei das Deckenpapier mit weißer Oberseite ein Kraftliner mit weißer Oberseite oder ein weiß beschichteter Kraftliner ist.

12. Wellpappe nach Anspruch 10 oder 11, wobei das Flächengewicht des ersten Deckenpapiers geringer ist als das Flächengewicht des zweiten Deckenpapiers.

13. Wellpappe nach einem der Ansprüche 10 bis 12, wobei das erste Deckenpapier eine Behälterpappe ist, die aus einem Rohstoff gebildet ist, der mindestens 80 % des Trockengewichts eines halbchemischen Zellstoffs, beispielsweise eines NSSC-Zellstoffs, aufweist.

## Revendications

1. Récipient ayant au moins une paroi composée d'un carton ondulé comprenant un carton intérieur, un carton extérieur et une cannelure disposée entre le carton intérieur et le carton extérieur, **caractérisé en ce que** l'hygroexpansivité dans la CD du carton intérieur est supérieure à l'hygroexpansivité dans la CD du carton extérieur, dans lequel l'hygroexpansivité est mesurée conformément à la norme ISO 8226-2:1990.

2. Récipient selon la revendication 1, dans lequel le carton intérieur est un carton formé à partir d'un matériau comprenant au moins 80 % en poids sec d'une pâte semi-chimique, telle qu'une pâte de type NSSC.

3. Récipient selon la revendication 2, dans lequel la pâte semi-chimique est constituée d'au moins 90 % en poids sec de bois dur.

4. Récipient selon l'une quelconque des revendications précédentes, dans lequel le carton extérieur est un carton kraft, tel qu'un papier kraft brun, un papier kraft blanc ou un papier kraft de couverture blanc, ou un papier kraft à revêtement blanc.

5. Récipient selon l'une quelconque des revendications précédentes, dans lequel le grammage du carton intérieur est inférieur au grammage du carton extérieur.

6. Récipient selon l'une quelconque des revendications précédentes, qui est une boîte ou un plateau.

7. Récipient selon la revendication 6, qui est un bac à produits.

8. Récipient selon l'une quelconque des revendications précédentes, dans lequel le carton ondulé comprend en outre un carton intermédiaire et une deuxième cannelure.

9. Utilisation du récipient selon l'une quelconque des revendications précédentes pour l'emballage dans une humidité relative d'au moins 80 %, par exemple d'au moins 85 %.

10. Carton ondulé comprenant un premier carton, un second carton et une cannelure disposée entre le premier et le second carton, dans lequel le premier carton est écru et le second carton est un carton blanc ou un carton à revêtement ou un carton enduit de pigments, **caractérisé en ce que** l'hygroexpansivité dans la CD du premier carton est supérieure à celle de la CD du second carton, dans lequel l'hygroexpansivité est mesurée conformément à la norme ISO 8226-2:1990.

11. Carton ondulé de la revendication 10, dans lequel le carton de couverture blanc est un papier kraft blanc ou un papier kraft à revêtement blanc.

12. Carton ondulé selon la revendication 10 ou la revendication 11, dans lequel le grammage du premier carton est inférieur au grammage du second carton.

13. Carton ondulé selon l'une quelconque des revendications 10 à 12, dans lequel le premier carton est un carton formé à partir d'un matériau comprenant au moins 80 % en poids sec d'une pâte semi-chimique, telle qu'une pâte de type NSSC.
